# EUROPEAN PATENT APPLICATION

(11) **EP 4 631 708 A1**
(43) Date of publication of application: **15.10.2025**
(21) Application number: 22967879.2
(22) Date of filing: 08.12.2022
(51) Int. Cl.: B30B 3/00, B30B 9/28, B29C 48/76

(54) **EXTRUDER AND HOUSING FOR EXHAUST AIR**

(71) Applicant: The Japan Steel Works, Ltd., Tokyo 141-0032 (JP)
(72) Inventor: SAGA, Daigo, Tokyo 141-0032 (JP); FUKUDA, Yuji, Tokyo 141-0032 (JP); MORI, Masayuki, Tokyo 141-0032 (JP)
(74) Representative: Simmons & Simmons LLP (Munich)
(86) International application number: PCT/JP2022/045342
(87) International publication number: WO 2024/122033

(57) **Abstract**

Provided is a technique of preventing blockage of a pipe 40 connected to an exhaust portion VU due to a foreign matter resulting from droplets 300 contained in a gas 200. The exhaust portion VU provided for discharging the gas 200 generated in a cylinder 10 of this extruder comprises trapping plates 500A to 500D for trapping the droplets 300 contained in the gas 200.

## Description

### TECHNICAL FIELD

The present invention relates to an extruder and an exhaust housing, for example, a technique effectively applied to an extruder and an exhaust housing capable of capturing droplets contained in a gas exhausted from the extruder.

### BACKGROUND ART

Japanese Unexamined Patent Application Publication No. 2022-71945 (Patent Document 1) describes a technique for exhausting dry distillation gas from an extruder by using a side vent stuffer that can exhaust the dry distillation gas to the outside of the extruder while pushing back a raw material discharged together with the dry distillation gas into the extruder.

### RELATED ART DOCUMENTS

### PATENT DOCUMENTS

Patent Document 1: Japanese Unexamined Patent Application Publication No. 2022-71945

### SUMMARY OF THE INVENTION

### PROBLEMS TO BE SOLVED BY THE INVENTION

An extruder is configured to supply a raw material from a hopper into a cylinder, convey the supplied raw material while kneading it by a screw provided inside the cylinder, and finally extrude the kneaded material. In the extruder configured in this manner, a gas is generated from the raw material when conveying the raw material while kneading it by the screw, so an exhaust unit for exhausting the gas is provided in the cylinder. Here, the exhaust unit is connected to a pipe, and the gas generated from the raw material is exhausted from the exhaust unit through the pipe.

The gas exhausted from the exhaust unit contains droplets blown out together with the gas in some cases. The droplets are made of, for example, oil or low-viscosity resin, and also enter the pipe from the exhaust unit along with the gas. In this case, the droplets adhere to the inside of the pipe and solidify, causing foreign matters to be deposited inside the pipe. Consequently, there is a risk that the pipe gets clogged when the foreign matters deposited inside the pipe increase. Therefore, in order to prevent the pipe from becoming clogged, it is desirable to devise the measures to prevent the droplets to be the cause of foreign matters from entering the inside of the pipe.

### MEANS FOR SOLVING THE PROBLEMS

An extruder according to one embodiment includes a cylinder having a screw therein and an exhaust unit configured to exhaust a gas generated in the cylinder. Here, the exhaust unit includes a capture plate configured to capture droplets contained in the gas.

An exhaust housing according to one embodiment is an exhaust housing configured to be attachable to an extruder and exhaust a gas generated in the extruder. This exhaust housing includes a capture plate configured to capture droplets contained in the gas.

In other words, an exhaust housing according to one embodiment is an exhaust housing configured to be connectable to a cylinder having a screw therein and exhaust a gas generated in the cylinder. At this time, the exhaust housing includes a capture plate configured to capture droplets contained in the gas.

### EFFECTS OF THE INVENTION

According to one embodiment, it is possible to suppress the droplets contained in the gas from entering the pipe from the exhaust unit provided in the extruder. In this way, according to one embodiment, it is possible to prevent the pipe connected to the exhaust unit from becoming clogged due to the foreign matters caused by the droplets.

### BRIEF DESCRIPTION OF THE DRAWINGS

[FIG. 1] is a diagram schematically illustrating a configuration of an extruder.
[FIG. 2] is a schematic diagram illustrating a configuration of an exhaust unit in a related art.
[FIG. 3] is a diagram for describing an embodiment in which a basic idea is embodied.
[FIG. 4] is a schematic diagram illustrating a specific example of an exhaust unit, in particular, (a) being a perspective view illustrating an overall configuration of the exhaust unit and (b) being a partial cutaway view of the exhaust unit.
[FIG. 5] is a diagram schematically illustrating a baffle, in particular, (a) being a schematic diagram illustrating an inside of the baffle and (b) being a schematic diagram illustrating an external configuration of the baffle.
[FIG. 6] is a partial cutaway view illustrating a configuration in which the baffle is incorporated in the exhaust unit.
[FIG. 7] is a diagram for describing an example of lengths of capture plates.
[FIG. 8] is a diagram for describing another example of the lengths of the capture plates.
[FIG. 9] is a diagram for describing an example of arrangement angles of the capture plates.
[FIG. 10] is a diagram for describing another example of the arrangement angles of the capture plates.
[FIG. 11] is a diagram schematically illustrating a configuration of an exhaust unit in a modification 1.
[FIG. 12] is a diagram schematically illustrating a configuration of an exhaust unit in a modification 2.

### DETAILED DESCRIPTION OF PREFERRED EMBODIMENTS

In all the drawings for describing the embodiments, the same members are denoted by the same reference characters in principle, and the repetitive descriptions thereof will be omitted. Note that hatching is applied even in a plan view in some cases in order to make the drawing easily understood.

### <Configuration of Extruder>

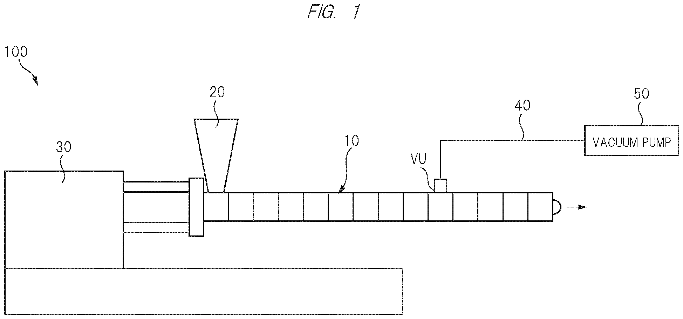

FIG. 1 is a diagram schematically illustrating a configuration of an extruder 100.

In FIG. 1, the extruder 100 includes a cylinder 10, a hopper 20, a rotation drive mechanism 30, and an exhaust unit VU.

The cylinder 10 is made up of a plurality of cylinder blocks. A screw is arranged inside the cylinder 10, and the screw is configured to be rotatable by the rotation drive mechanism 30. Also, the exhaust unit VU is attached to the cylinder 10. This exhaust unit VU is connected to a vacuum pump 50 via, for example, a pipe 40. Further, the cylinder 10 is connected to the hopper 20, and the hopper 20 functions as a raw material supply port that supplies a raw material into the cylinder 10.

In the extruder 100 configured in this manner, when a raw material is supplied to the hopper 20, the raw material is fed into the cylinder 10. The raw material fed into the cylinder 10 is kneaded by the screw provided inside the cylinder 10. Specifically, by the screw rotated by the rotation drive mechanism 30, the raw material fed into the cylinder 10 is kneaded to be a kneaded material, and is conveyed from an upstream side to a downstream side of the cylinder 10.

At this time, a gas is generated from the kneaded material. The generated gas flows into the exhaust unit VU attached to the cylinder 10, and is then exhausted from the exhaust unit VU through the pipe 40. For example, the vacuum pump 50 is connected to the pipe 40, and the gas generated from the raw material is exhausted to the outside of the cylinder 10 through the path of the inside of the cylinder 10, the exhaust unit VU, and the pipe 40 by operating the vacuum pump 50.

### <Description of Related Art>

Next, a related art regarding the structure of the exhaust unit VU will be described.

The "related art" mentioned in this specification refers to an art which is not publicly known, but has problems found by the inventors of this application and is the premise of the present invention.

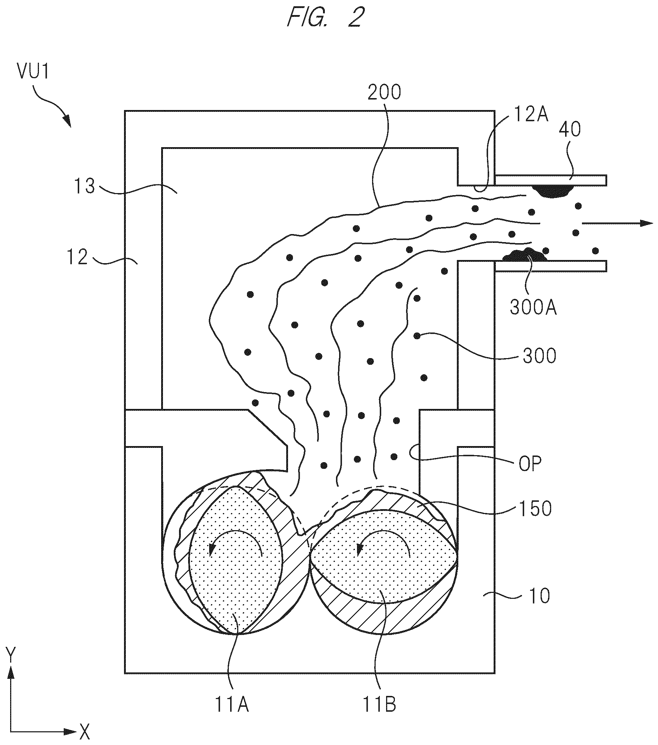

FIG. 2 is a schematic diagram illustrating a configuration of an exhaust unit VU1 in the related art.

In FIG. 2, screws 11A and 11B are arranged inside the cylinder 10 which is a component of the extruder, and the screws 11A and 11B are configured to rotate by the rotation drive mechanism 30 illustrated in FIG. 1.

Next, the exhaust unit VU1 is attached to the cylinder 10. Specifically, the exhaust unit VU1 is made up of a housing (vent box) 12 having an internal space 13, and the housing 12 is attached to the extruder such that an opening OP provided in the cylinder 10 is connected to the internal space 13. Further, an exhaust port 12A is provided in a side surface of the housing 12, and this exhaust port 12A is connected to the pipe 40.

In the related art configured in this manner, the raw material supplied from the hopper 20 illustrated in FIG. 1 is kneaded into a kneaded material 150 by rotating the screw 11A and the screw 11B by the rotation drive mechanism 30 illustrated in FIG. 1. At this time, a gas 200 is generated from the kneaded material 150, and an entrainment phenomenon occurs. The entrainment phenomenon refers to the phenomenon in which droplets 300 are splashed along with the flow of the gas 200, and the droplets 300 blown out together with the gas 200 are made of, for example, oil or low-viscosity resin.

As illustrated in FIG. 2, the gas 200 containing the droplets 300 generated from the kneaded material 150 flows into the internal space 13 of the housing 12 from the opening OP formed in the cylinder 10, and is then exhausted to the outside through the pipe 40 from the exhaust port 12A provided in the side surface of the housing 12.

As described above, the exhaust unit VU1 in the related art can exhaust the gas 200 containing the droplets 300 generated in the cylinder 10 from the cylinder 10 to the outside of the extruder.

Here, in the related art, as illustrated in FIG. 2, not only the gas 200 but also the droplets 300 contained in the gas 200 enter the pipe 40. As a result, the droplets 300 adhere to the inner wall of the pipe 40 and solidify, causing foreign matters 300A to be deposited on the inner wall of the pipe 40. Consequently, there is a risk that the pipe 40 gets clogged when the amount of deposited foreign matters 300A increases. Namely, in the related art, there is a fear that not only the gas 200 but also a large amount of the droplets 300 contained in the gas 200 enter the pipe 40 from the exhaust port 12A of the exhaust unit VU1, causing the foreign matters 300A to be deposited in the pipe 40, resulting in the clogging of the pipe 40. In other words, there is room for improvement in the related art from the viewpoint of preventing the pipe 40 from being clogged.

Therefore, in the embodiment, measures to overcome the room for improvement that exists in the related art are implemented. Hereinafter, the technical idea of the embodiment in which these measures are implemented will be described.

### <Basic Idea in Embodiment>

The basic idea in this embodiment is that the exhaust unit, which is provided to exhaust the gas generated in the cylinder of the extruder, includes a capture plate configured to capture the droplets contained in the gas. Consequently, according to the basic idea, the droplets contained in the gas flowing from the cylinder into the exhaust unit adhere to the capture plate, with the result that it is possible to suppress the droplets from entering the pipe from the exhaust port of the exhaust unit. Therefore, according to the basic idea, since the deposition of foreign matters caused by droplets adhering to and solidifying on the inner wall of the pipe is suppressed, a remarkable effect of being able to prevent the clogging of the pipe due to the deposition of foreign matters can be obtained.

As described above, the basic idea is to remove the droplets in the exhaust unit before they enter the pipe from the exhaust port of the exhaust unit, and this idea is realized by providing the capture plate in the internal space of the housing constituting the exhaust unit. In other words, the capture plate is arranged with the intention to make the gas containing the droplets that flows from the cylinder into the internal space of the housing come into contact with the capture plate. In this way, when the gas containing droplets comes into contact with the capture plate, the droplets contained in the gas adhere to the capture plate, so that the droplets can be removed from the gas. Then, the gas from which the droplets have been removed by the capture plate is exhausted to the pipe from the exhaust port provided in the housing, thereby suppressing the droplets from entering the pipe, with the result that clogging of the pipe due to the droplets is prevented.

Hereinafter, an embodiment in which this basic idea is embodied will be described.

### <Embodiment>

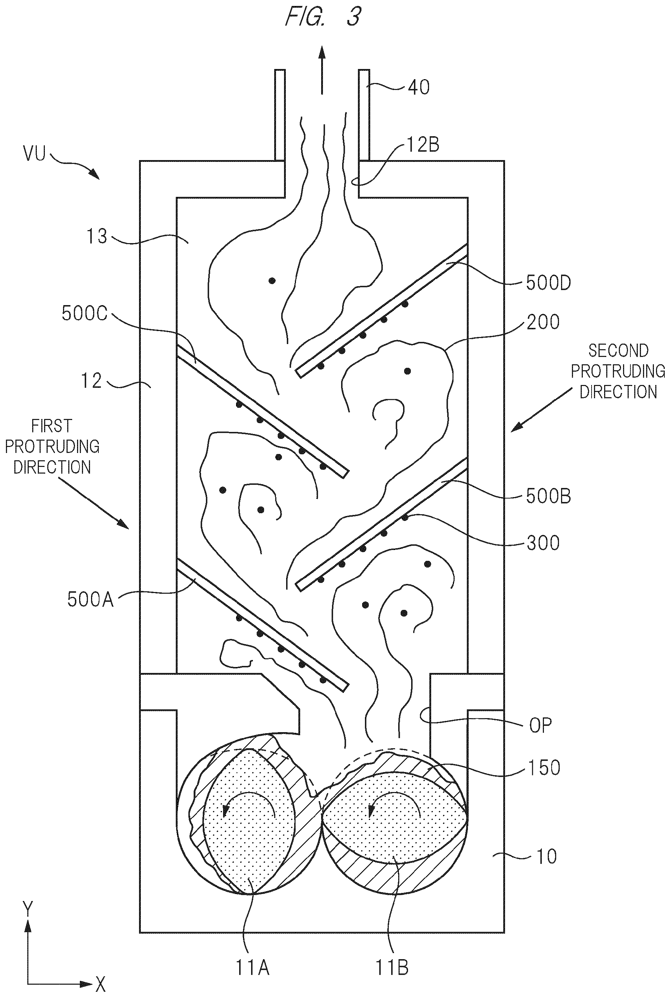

FIG. 3 is a diagram for describing the embodiment in which the basic idea is embodied.

In FIG. 3, the screws 11A and 11B are arranged inside the cylinder 10 which is a component of the extruder, and the screws 11A and 11B are configured to rotate by the rotation drive mechanism 30 illustrated in FIG. 1.

Next, the exhaust unit VU is attached to the cylinder 10. Specifically, the exhaust unit VU is made up of the housing (vent box) 12 having the internal space 13, and the housing 12 is attached to the extruder such that the opening OP provided in the cylinder 10 is connected to the internal space 13. Also, the housing 12 has an opposing surface (upper surface) that is opposed to the opening OP provided in the cylinder 10, and an exhaust port 12B is provided in the opposing surface. This exhaust port 12B is connected to the pipe 40. Furthermore, in the embodiment, a plurality of capture plates 500A to 500D are provided in the internal space 13 of the housing 12 which is a component of the exhaust unit VU.

In the embodiment configured in this manner, the raw material supplied from the hopper 20 illustrated in FIG. 1 is kneaded into the kneaded material 150 by rotating the screw 11A and the screw 11B by the rotation drive mechanism 30 illustrated in FIG. 1. At this time, the gas 200 is generated from the kneaded material 150, and an entrainment phenomenon occurs. The entrainment phenomenon refers to the phenomenon in which the droplets 300 are splashed along with the flow of the gas 200, and the droplets 300 blown out together with the gas 200 are made of, for example, oil or low-viscosity resin.

Then, as illustrated in FIG. 3, the gas 200 containing the droplets 300 generated from the kneaded material 150 flows into the internal space 13 of the housing 12 from the opening OP formed in the cylinder 10, passes within the internal space 13, while coming into contact with the plurality of capture plates 500A to 500D provided in the internal space 13, and is then exhausted to the outside through the pipe 40 from the exhaust port 12B provided in the upper surface of the housing 12.

As described above, the extruder in the embodiment includes the cylinder 10 having the screw 11A and the screw 11B therein and the exhaust unit VU configured to exhaust the gas 200 generated in the cylinder 10. At this time, the exhaust unit VU has the capture plates 500A to 500D configured to capture the droplets 300 contained in the gas 200.

For example, as illustrated in FIG. 3, in the extruder, the cylinder 10 has the opening OP for discharging the gas 200 containing the droplets 300. Also, the exhaust unit VU has the housing 12 having the internal space 13 connected to the opening OP, and the housing 12 is provided with the exhaust port 12B for exhausting the gas 200 that has flowed into the internal space 13 from the opening OP from the internal space 13. Meanwhile, the plurality of capture plates 500A to 500D are provided in the internal space 13.

Each of the plurality of capture plates 500A to 500D is arranged so as to be brought into contact with the flow of the gas 200 containing the droplets 300 flowing from the opening OP into the internal space 13. In other words, each of the plurality of capture plates 500A to 500D is arranged so as to block a part of the flow of the gas 200 containing the droplets 300 flowing from the opening OP into the internal space 13.

For example, as illustrated in FIG. 3, the plurality of capture plates 500A to 500D include capture plates 500A and 500C that protrude in a first protruding direction from the inner wall of the housing 12 toward the internal space 13 and capture plates 500B and 500D that protrude in a second protruding direction from the inner wall of the housing 12 toward the internal space 13. At this time, the first protruding direction and the second protruding direction are directions intersecting with each other, and the capture plate 500A protruding in the first protruding direction and the capture plate 500B protruding in the second protruding direction are separated from each other. Similarly, the capture plate 500C protruding in the first protruding direction and the capture plate 500D protruding in the second protruding direction are separated from each other.

Focusing on the housing (exhaust housing) 12 which is a component of the exhaust unit VU, the housing 12 is an exhaust housing that is configured to be attachable to the extruder and exhaust the gas 200 generated in the extruder. Here, the housing 12 has the capture plates 500A to 500D configured to capture the droplets 300 contained in the gas 200. In other words, the housing 12 is an exhaust housing that is configured to be connectable to the cylinder 10 having the screw 11A and the screw 11B therein and exhaust the gas 200 generated in the cylinder 10, and the housing 12 has the capture plates 500A to 500D configured to capture the droplets 300 contained in the gas 200.

Here, for example, as illustrated in FIG. 3, the housing 12 is provided with the exhaust port 12B for exhausting the gas 200, and this exhaust port 12B is configured to be connectable to the pipe 40.

Subsequently, a specific configuration example of the exhaust unit VU will be described.

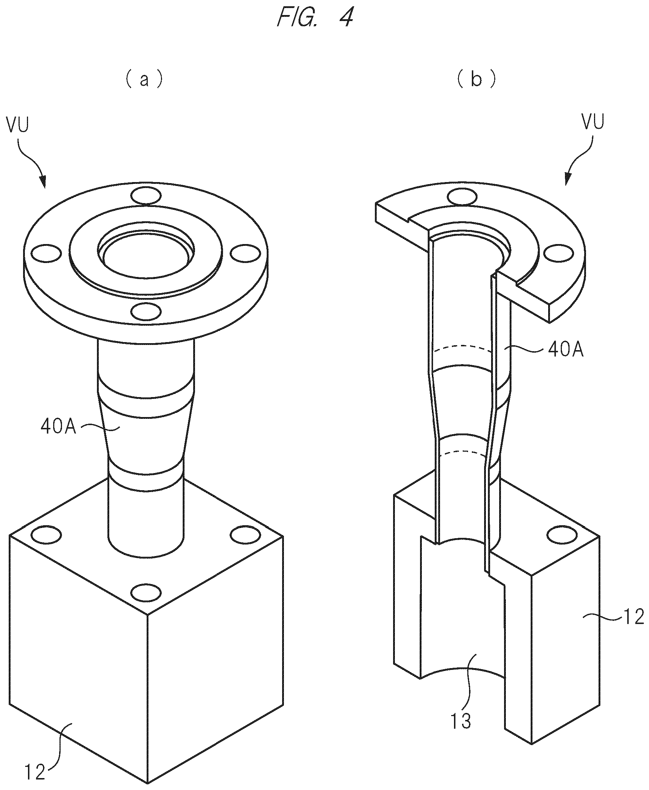

FIG. 4 is a schematic diagram illustrating a specific example of the exhaust unit VU. In particular, FIG. 4(a) is a perspective view illustrating an overall configuration of the exhaust unit VU and FIG. 4(b) is a partial cutaway view of the exhaust unit VU.

In FIG. 4(a) and FIG. 4(b), the exhaust unit VU includes the housing 12 having the internal space 13 and a pipe connection portion 40A, and the housing 12 and the pipe connection portion 40A are connected.

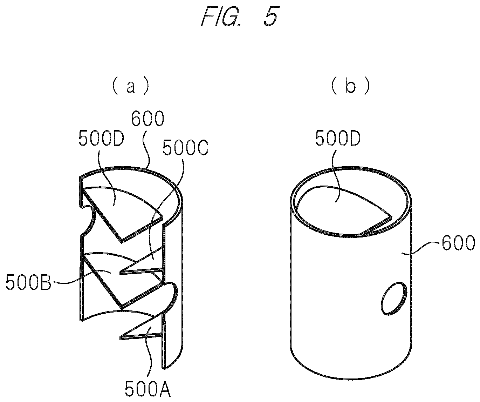

Next, FIG. 5 is a diagram schematically illustrating a baffle 600. In particular, FIG. 5(a) is a schematic diagram illustrating an inside of the baffle 600 and FIG. 5(b) is a schematic diagram illustrating an external configuration of the baffle. As illustrated in FIG. 5(a) and FIG. 5(b), the baffle 600 has a cylindrical shape, and the plurality of capture plates 500A to 500D are provided inside the baffle 600. Each of the plurality of capture plates 500A to 500D is configured to have, for example, a sector shape.

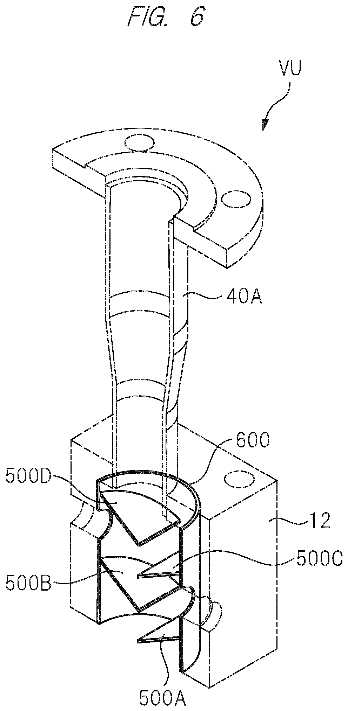

Subsequently, FIG. 6 is a partial cutaway view illustrating a configuration in which the baffle 600 illustrated in FIG. 5 is incorporated in the exhaust unit VU illustrated in FIG. 4. As illustrated in FIG. 6, the baffle 600 provided with the plurality of capture plates 500A to 500D is incorporated in the internal space of the housing 12 which is a component of the exhaust unit VU. This constitutes a specific example of the exhaust unit VU in the embodiment.

### <<Features in Embodiment>>

Next, features in the embodiment will be described.

The first feature in the embodiment is that as illustrated in, for example, FIG. 3, the plurality of capture plates 500A to 500D are provided in the internal space 13 of the housing 12. In other words, the first feature is that the exhaust unit VU has the plurality of capture plates 500A to 500D.

Therefore, according to the first feature, the droplets 300 contained in the gas 200 flowing from the cylinder 10 into the exhaust unit VU adhere to the capture plates 500A to 500D, which makes it possible to prevent the droplets 300 from entering the pipe 40 from the exhaust port 12B of the exhaust unit VU (see FIG. 3). In this way, according to the first feature, since the deposition of foreign matters caused by droplets adhering to and solidifying on the inner wall of the pipe 40 is suppressed, it is possible to prevent the clogging of the pipe 40 due to the deposition of foreign matters.

Specifically, in FIG. 3, the gas 200 containing the droplets 300 is generated from the kneaded material 150 kneaded by rotating the screw 11A and the screw 11B provided inside the cylinder 10. Then, the gas 200 containing the droplets 300 flows from the opening OP provided in the cylinder 10 into the internal space 13 of the housing 12 which is a component of the exhaust unit VU. The gas 200 containing the droplets 300 that has flowed into the internal space 13 first comes into contact with the capture plate 500A protruding in the first protruding direction from the inner wall of the internal space 13. In other words, a part of the flow of the gas 200 containing the droplets 300 that has flowed into the internal space 13 is blocked by the capture plate 500A. At this time, some of the droplets 300 contained in the gas 200 adhere to the capture plate 500A. As a result, some of the droplets 300 contained in the gas 200 are removed.

Subsequently, a part of the gas 200 that is not blocked by the capture plate 500A travels upward in the internal space 13 and comes into contact with the capture plate 500B protruding in the second protruding direction from the inner wall of the internal space 13. In this way, some of the droplets 300 contained in the gas 200 adhere to the capture plate 500B. As a result, some of the droplets 300 contained in the gas 200 are removed.

Then, a part of the gas 200 that is not blocked by the capture plate 500B travels upward in the internal space 13 and comes into contact with the capture plate 500C protruding in the first protruding direction from the inner wall of the internal space 13. In this way, some of the droplets 300 contained in the gas 200 adhere to the capture plate 500C. As a result, some of the droplets 300 contained in the gas 200 are removed.

Furthermore, a part of the gas 200 that is not blocked by the capture plate 500C travels upward in the internal space 13 and comes into contact with the capture plate 500D protruding in the second protruding direction from the inner wall of the internal space 13. In this way, some of the droplets 300 contained in the gas 200 adhere to the capture plate 500D. As a result, some of the droplets 300 contained in the gas 200 are removed.

In this manner, the gas 200 from which most of the droplets 300 have been removed is exhausted from the pipe 40 through the exhaust port 12B provided in the opposing surface (upper surface) of the housing 12 that is opposed to the opening OP. At this time, according to the first feature, most of the droplets 300 contained in the gas 200 are removed by adhering to the capture plates 500A to 500D. Therefore, according to the first feature, the droplets 300 are suppressed from entering the pipe 40, with the result that clogging of the pipe 40 due to the droplets 300 can be prevented.

In this way, it can be seen that the basic idea of removing the droplets 300 in the exhaust unit VU before they enter the pipe 40 from the exhaust port 12B of the exhaust unit VU is realized in the first feature of the embodiment in which the plurality of capture plates 500A to 500D are provided in the internal space 13 of the housing 12 that constitutes the exhaust unit VU.

Next, the second feature in the embodiment is that as illustrated in, for example, FIG. 3, the exhaust port 12B is provided in the opposing surface (upper surface) of the housing 12 that is opposed to the opening OP provided in the cylinder 10. In this way, even if the droplets 300 contained in the gas 200 cannot be completely removed by the capture plates 500A to 500D and the droplets 300 enter the pipe 40 and adhere to the inner wall of the pipe 40, it can be expected that the droplets 300 that have adhered to the inner wall of the pipe 40 return from the pipe 40 through the exhaust port 12B to the internal space 13 by gravity. In particular, since the gravity acting on the droplets 300 becomes greater as the droplets 300 become larger, the droplets 300 more easily return from the pipe 40 to the internal space 13 of the housing 12, making it possible to reduce the potential for large droplets 300 that would clog the pipe 40 to adhere to the inner wall of the pipe 40.

Therefore, according to the second feature, when combined with the first feature described above, it is possible to further prevent the pipe 40 from being clogged due to the droplets 300.

### <<Detailed Arrangement Configuration of Capture Plates>>

Subsequently, the detailed arrangement configuration of the capture plates will be described.

### (1) Length of Capture Plate

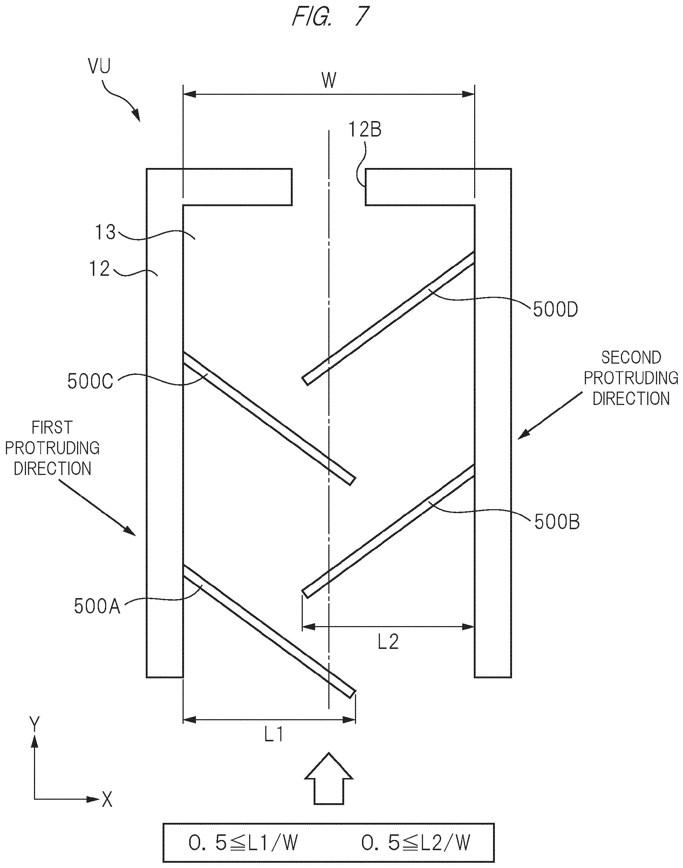

FIG. 7 is a diagram for describing an example of lengths of capture plates.

In FIG. 7, the direction in which the gas containing the droplets flows into the internal space 13 of the housing 12 is the vertical direction (Y direction). In other words, the direction in which the gas containing the droplets flows into the internal space 13 of the housing 12 is perpendicular to the opening provided in the cylinder.

Also, the first protruding direction in which the capture plate 500A and the capture plate 500C each protrude from the inner wall of the housing 12 toward the internal space 13 is a direction inclined from the horizontal direction (X direction), and the second protruding direction in which the capture plate 500B and the capture plate 500D each protrude from the inner wall of the housing 12 toward the internal space 13 is a direction inclined from the horizontal direction (X direction).

Here, when the maximum length of the internal space 13 in the horizontal direction is defined as "W", the maximum length of each of the capture plate 500A and the capture plate 500C in the horizontal direction is defined as "L1", and the maximum length of each of the capture plate 500B and the capture plate 500D in the horizontal direction is defined as "L2", then the relationships of 0.5 ≤ L1/W and 0.5 ≤ L2/W hold.

By setting the length of each of the capture plates 500A to 500D in this manner, the capture efficiency of capturing the droplets contained in the gas by the capture plates 500A to 500D can be improved. In other words, when the length of each of the capture plates 500A to 500D is designed such that the relationships of 0.5 ≤ L1/W and 0.5 ≤ L2/W hold, the probability of the gas containing droplets coming into contact with each of the capture plates 500A to 500D increases, and thus most of the droplets contained in the gas can be removed by adhering to the capture plates 500A to 500D.

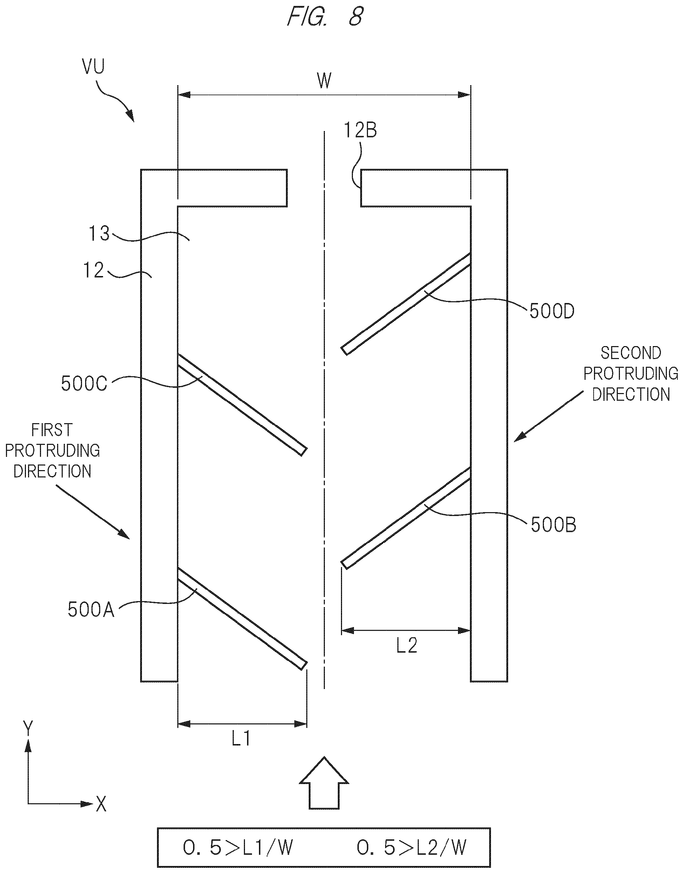

FIG. 8 is a diagram for describing another example of the lengths of the capture plates.

In FIG. 8, the direction in which the gas containing the droplets flows into the internal space 13 of the housing 12 is the vertical direction (Y direction). Also, the first protruding direction in which the capture plate 500A and the capture plate 500C each protrude from the inner wall of the housing 12 toward the internal space 13 is a direction inclined from the horizontal direction (X direction), and the second protruding direction in which the capture plate 500B and the capture plate 500D each protrude from the inner wall of the housing 12 toward the internal space 13 is a direction inclined from the horizontal direction (X direction).

Here, when the maximum length of the internal space 13 in the horizontal direction is defined as "W", the maximum length of each of the capture plate 500A and the capture plate 500C in the horizontal direction is defined as "L1", and the maximum length of each of the capture plate 500B and the capture plate 500D in the horizontal direction is defined as "L2", then the relationships of 0.5 > L1/W and 0.5 > L2/W hold.

By setting the length of each of the capture plates 500A to 500D in this manner, the capture efficiency of capturing the droplets contained in the gas by the capture plates 500A to 500D is lowered as compared with the configuration illustrated in FIG. 7, but the passage efficiency of the gas passing through the internal space 13 can be improved. In other words, when the maximum length of each of the capture plates 500A to 500D is designed such that the relationships of 0.5 > L1/W and 0.5 > L2/W hold, the gas passage efficiency can be improved, and thus the exhaust efficiency of the gas generated from the kneaded material can be improved.

In view of the above and taking FIG. 7 and FIG. 8 into consideration, it is desirable from the viewpoint of both capturing droplets contained in the gas and improving the gas passage efficiency that the maximum length of each of the capture plates 500A to 500D is set such that the relationships of 0.3 ≤ L1/W ≤ 0.9 and 0.3 ≤ L2/W ≤ 0.9 hold.

This is because the gas passage efficiency becomes too low if the maximum length of each of the capture plates 500A to 500D is set such that the relationships of L1/W > 0.9 and L2/W > 0.9 hold, while it becomes difficult to obtain the droplet capture effect by the capture plates 500A to 500D if the maximum length of each of the capture plates 500A to 500D is set such that the relationships of L1/W < 0.3 and L2/W < 0.3 hold.

### (2) Arrangement Angle of Capture Plate

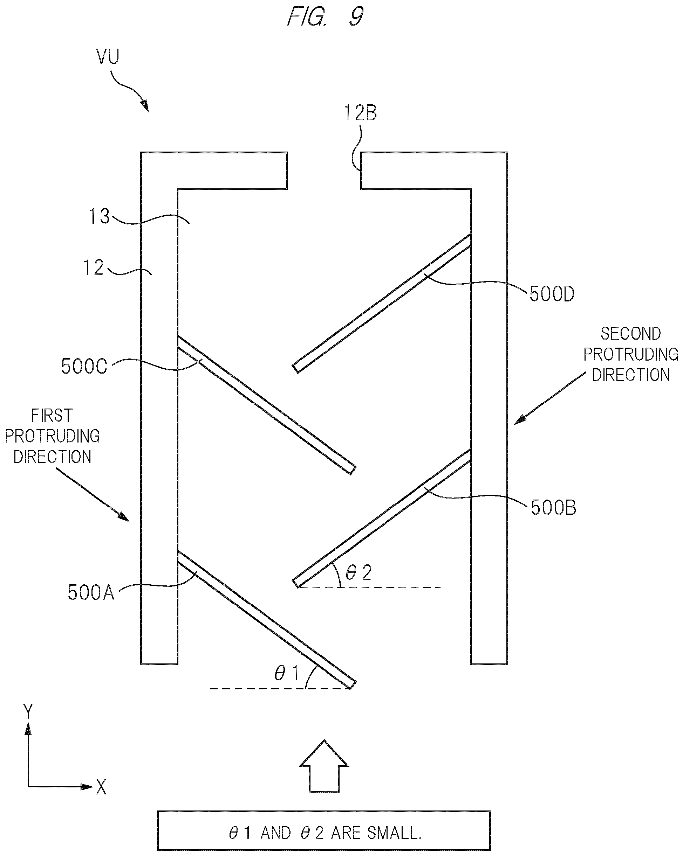

FIG. 9 is a diagram for describing an example of arrangement angles of the capture plates.

In FIG. 9, the direction in which the gas containing the droplets flows into the internal space 13 of the housing 12 is the vertical direction (Y direction). Also, the first protruding direction in which the capture plate 500A and the capture plate 500C each protrude from the inner wall of the housing 12 toward the internal space 13 is a direction inclined from the horizontal direction (X direction), and the second protruding direction in which the capture plate 500B and the capture plate 500D each protrude from the inner wall of the housing 12 toward the internal space 13 is a direction inclined from the horizontal direction (X direction) .

Here, in FIG. 9, the angle formed between the horizontal direction and the first protruding direction is defined as θ1, and the angle formed between the horizontal direction and the second protruding direction is defined as θ2. When θ1 and θ2 are small, the size of the housing 12 having the internal space 13 can be reduced.

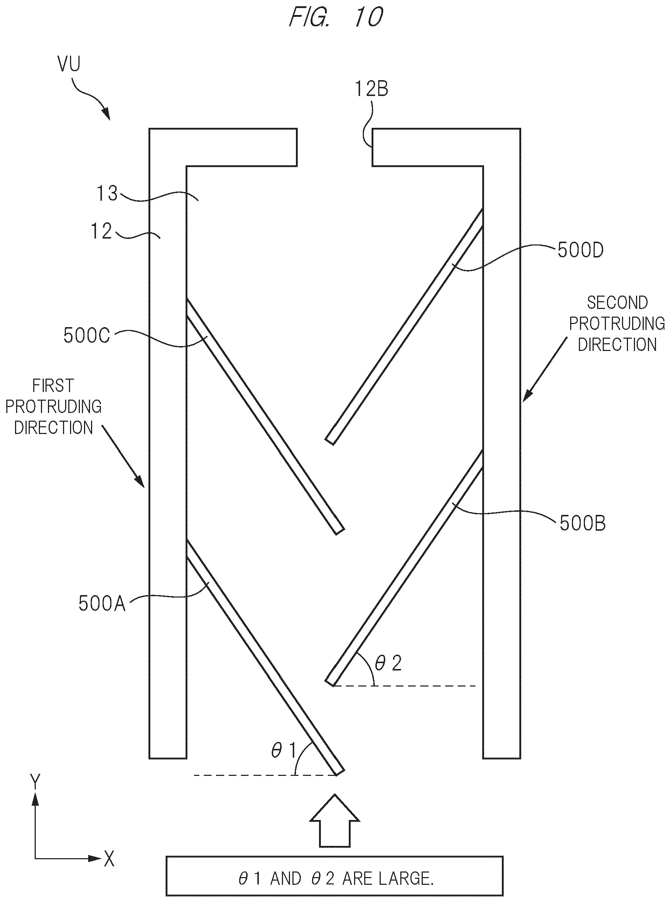

FIG. 10 is a diagram for describing another example of the arrangement angles of the capture plates.

In FIG. 10, the direction in which the gas containing the droplets flows into the internal space 13 of the housing 12 is the vertical direction (Y direction). Also, the first protruding direction in which the capture plate 500A and the capture plate 500C each protrude from the inner wall of the housing 12 toward the internal space 13 is a direction inclined from the horizontal direction (X direction), and the second protruding direction in which the capture plate 500B and the capture plate 500D each protrude from the inner wall of the housing 12 toward the internal space 13 is a direction inclined from the horizontal direction (X direction).

Here, in FIG. 10, the angle formed between the horizontal direction and the first protruding direction is defined as θ1, and the angle formed between the horizontal direction and the second protruding direction is defined as θ2. When θ1 and θ2 are large, the droplets adhering to each of the capture plates 500A to 500D can be easily fallen toward the extruder side (cylinder side). Therefore, when θ1 and θ2 are large, the droplets can be easily removed.

In view of the above and taking FIG. 9 and FIG. 10 into consideration, it is desirable from the viewpoint of both reducing the size of the housing 12 which is a component of the exhaust unit and making it easier to remove the droplets that the arrangement angle of each of the capture plates 500A to 500D is set such that the relationships of 30° ≤ θ1 ≤ 80° and 30° ≤ θ2 ≤ 80° hold.

Furthermore, it is desirable to arrange the capture plates 500A to 500D such that the relationships of 40° ≤ θ1 ≤ 50° and 40° ≤ θ2 ≤ 50° hold. However, the arrangement angles of the capture plates 500A to 500D are not limited to these, and for example, the capture plates 500A to 500D may be arranged such that the relationships of θ1 = 0 and θ2 = 0 hold. In other words, the basic idea can also be embodied by arranging each of the capture plates 500A to 500D such that they protrude from the inner wall of the housing 12 in the horizontal direction (X direction).

### <Modification 1>

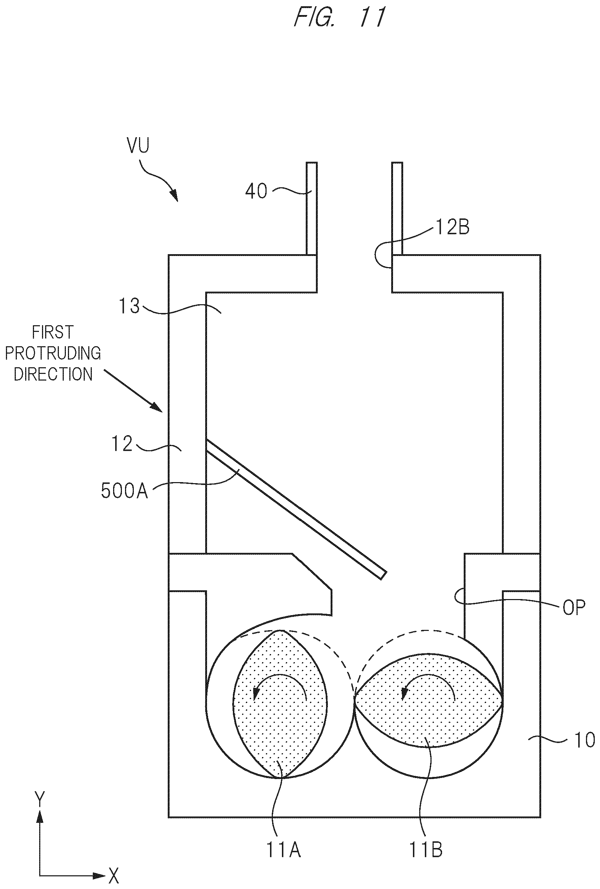

FIG. 11 is a diagram schematically illustrating a configuration of the exhaust unit VU in a modification 1.

As illustrated in FIG. 11, one capture plate 500A is provided in the internal space 13 of the housing 12 which is a component of the exhaust unit VU. The exhaust unit VU may be configured so as to have one capture plate 500A in this manner. In other words, the basic idea can be embodied not only as a configuration in which the plurality of capture plates 500A to 500D are provided in the exhaust unit VU as in the embodiment illustrated in FIG. 3, but also as a configuration in which one capture plate 500A is provided in the exhaust unit VU as in the modification 1 illustrated in FIG. 11.

### <Modification 2>

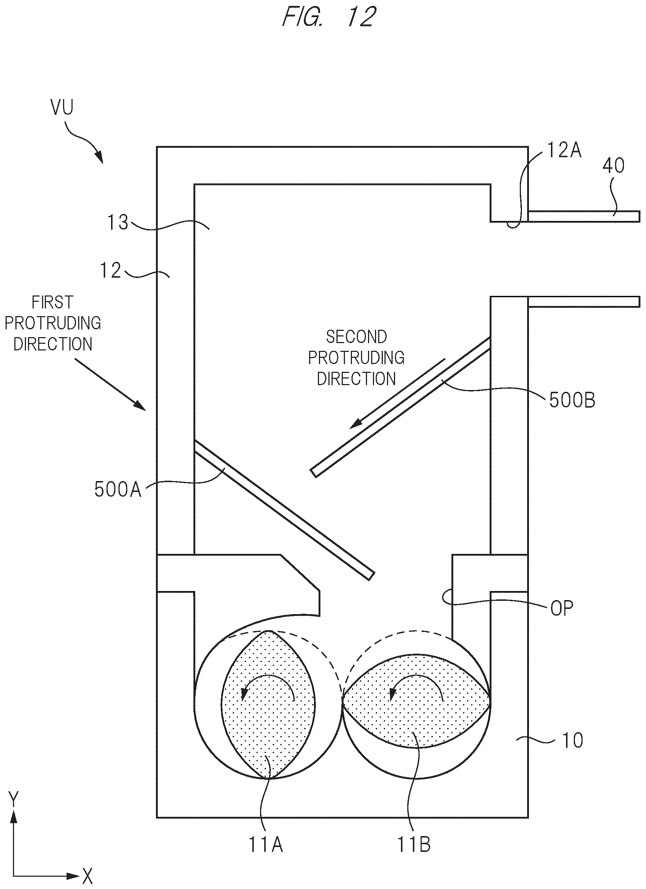

FIG. 12 is a diagram schematically illustrating a configuration of the exhaust unit VU in a modification 2.

As illustrated in FIG. 12, the exhaust port 12A is provided in the side surface of the housing 12 which is a component of the exhaust unit VU. The exhaust unit VU may be configured so as to have the exhaust port 12A provided in the side surface of the housing 12 in this manner. In other words, the basic idea can be embodied not only as a configuration in which the housing 12 has the exhaust port 12B in the upper surface as in the embodiment illustrated in FIG. 3, but also as a configuration in which the housing 12 has the exhaust port 12A in the side surface as in the modification 2 illustrated in FIG. 12.

The invention made by the inventors of this application has been specifically described above based on the embodiment thereof, but it goes without saying that the present invention is not limited to the embodiment described above and various modifications are possible within the range not departing from the gist of the present invention.

### REFERENCE SIGNS LIST

10 cylinder
11A screw
11B screw
12 housing
12A exhaust port
12B exhaust port
13 internal space
20 hopper
30 rotation drive mechanism
40 pipe
40A pipe connection portion
50 vacuum pump
100 extruder
150 kneaded material
200 gas
300 droplets
300A foreign matter
500A capture plate
500B capture plate
500C capture plate
500D capture plate
600 baffle
OP opening
VU exhaust unit
VU1 exhaust unit

## Claims

1. An extruder comprising:
a cylinder having a screw therein; and
an exhaust unit configured to exhaust a gas generated in the cylinder,
wherein the exhaust unit has a capture plate configured to capture droplets contained in the gas.

2. The extruder according to claim 1,
wherein the cylinder has an opening for discharging the gas containing the droplets,
wherein the exhaust unit has a housing having an internal space connected to the opening,
wherein the housing is provided with an exhaust port for exhausting the gas that has flowed into the internal space from the opening from the internal space, and
wherein the capture plate is provided in the internal space.

3. The extruder according to claim 2,
wherein the exhaust port is configured to be connectable to a pipe.

4. The extruder according to claim 2,
wherein the capture plate is provided so as to be brought into contact with a flow of the gas containing the droplets flowing from the opening into the internal space.

5. The extruder according to claim 2,
wherein the capture plate is provided so as to block a part of a flow of the gas containing the droplets flowing from the opening into the internal space.

6. The extruder according to claim 1,
wherein a plurality of capture plates each equivalent to the capture plate are provided.

7. The extruder according to claim 2,
wherein a plurality of capture plates each equivalent to the capture plate are provided,
wherein the plurality of capture plates include:
a first capture plate protruding in a first protruding direction from an inner wall of the housing toward the internal space; and
a second capture plate protruding in a second protruding direction from the inner wall of the housing toward the internal space,
wherein the first protruding direction and the second protruding direction are directions intersecting with each other, and
wherein the first capture plate and the second capture plate are separated from each other.

8. The extruder according to claim 7,
wherein a direction in which the gas containing the droplets flows into the internal space is a vertical direction,
wherein the first protruding direction is a direction inclined from a horizontal direction,
wherein the second protruding direction is a direction inclined from the horizontal direction, and
wherein, when a maximum length of the internal space in the horizontal direction is defined as W, a maximum length of the first capture plate in the horizontal direction is defined as L1, and a maximum length of the second capture plate in the horizontal direction is defined as L2, relationships of 0.5 ≤ L1/W and 0.5 ≤ L2/W hold.

9. The extruder according to claim 7,
wherein a direction in which the gas containing the droplets flows into the internal space is a vertical direction,
wherein the first protruding direction is a direction inclined from a horizontal direction,
wherein the second protruding direction is a direction inclined from the horizontal direction, and
wherein, when a maximum length of the internal space in the horizontal direction is defined as W, a maximum length of the first capture plate in the horizontal direction is defined as L1, and a maximum length of the second capture plate in the horizontal direction is defined as L2, relationships of 0.3 ≤ L1/W ≤ 0.9 and 0.3 ≤ L2/W ≤ 0.9 hold.

10. The extruder according to claim 7,
wherein a direction in which the gas containing the droplets flows into the internal space is a vertical direction,
wherein the first protruding direction is a direction inclined from a horizontal direction,
wherein the second protruding direction is a direction inclined from the horizontal direction, and
wherein, when an angle formed between the horizontal direction and the first protruding direction is defined as θ1 and an angle formed between the horizontal direction and the second protruding direction is defined as θ2, relationships of 30° ≤ θ1 ≤ 80° and 30° ≤ θ2 ≤ 80° hold.

11. The extruder according to claim 10,
wherein relationships of 40° ≤ θ1 ≤ 50° and 40° ≤ θ2 ≤ 50° hold.

12. The extruder according to claim 2,
wherein the housing has an opposing surface that is opposed to the opening, and
wherein the exhaust port is provided in the opposing surface.

13. An exhaust housing configured to be attachable to an extruder and exhaust a gas generated in the extruder, the exhaust housing comprising a capture plate configured to capture droplets contained in the gas.

14. An exhaust housing configured to be connectable to a cylinder having a screw therein and exhaust a gas generated in the cylinder, the exhaust housing comprising a capture plate configured to capture droplets contained in the gas.

15. The exhaust housing according to claim 14, comprising an exhaust port for exhausting the gas,
wherein the exhaust port is configured to be connectable to a pipe.
